# DEMANDE DE BREVET EUROPEEN

(11) **EP 1 647 872 A1**
(43) Date de publication de la demande: **19.04.2006**
(21) Numéro de dépôt: 04360091.5
(22) Date de dépôt: 14.10.2004
(51) Int. Cl.: G05G 5/02, B60T 7/00, B60K 26/00, F16H 59/00, G06F 3/00

(54) **Module de commande avec retour de force amélioré**

(71) Demandeur: Delphi Technologies Inc., Troy, MI 48007 (US)
(72) Inventeur: Tupinier, Laurent, 67116 Reischtett (FR); Giordano, Jean, 67100 Strasbourg (FR); Marcuzzi, Laurent, 42000 Saint-Etienne (FR)
(74) Mandataire: Merckling, Norbert

(57) **Abrégé**

La présente invention se rapporte à un module de commande pour activer et/ou actionner des fonctionnalités d'un appareil, d'une machine ou d'un véhicule, comportant :
- un organe de commande (1) manipulable par l'utilisateur en vue de piloter au moins une fonctionnalité,
- un dispositif de commande haptique (2) permettant de générer un retour de force sur l'organe de commande, le retour de force étant antagoniste au déplacement de l'organe de commande (1) et perceptible par l'utilisateur,
caractérisé en ce qu'il comporte un moyen d'indexage mécanique pour ramener et maintenir l'organe de commande (1) en l'absence d'une manipulation de l'organe de commande (1), dans au moins une position d'indexage stable prédéfinie.

## Description

La présente invention se rapporte au domaine technique général des modules de commande pour activer et/ou désactiver des fonctions ou fonctionnalités. De tels modules se trouvent par exemple sur des appareils, des machines ou des véhicules. La présente invention concerne plus particulièrement des commandes sous-volant de véhicules, comportant un tel module de commande.

Ces modules de commande peuvent intégrer ou être associés à un dispositif de commande haptique, connu en tant que tel.

Un dispositif de commande haptique permet de donner au manipulateur d'un organe de commande, lors d'une activation ou lors d'une désactivation, une sensation prédéfinie par l'intermédiaire d'une force au moins en partie antagoniste à l'action du manipulateur.

Cette force antagoniste est par exemple générée par un actionneur passif piloté par le dispositif de commande haptique. Par actionneur passif, il convient d'entendre tout dispositif ou tout moyen susceptible de générer une force s'opposant à un mouvement, tel en frein, sans toutefois pouvoir générer un mouvement, un déplacement ou une rotation d'une pièce ou d'un mécanisme. Un actionneur actif peut être défini comme un moteur, pouvant générer un tel mouvement, déplacement ou rotation.

Il est connu de réaliser un module de commande, pour activer et/ou actionner des fonctionnalités d'un appareil, d'une machine ou d'un véhicule, comportant :
- un organe de commande manipulable par l'utilisateur en vue de piloter au moins une fonctionnalité,
- et un dispositif de commande haptique permettant de générer un retour de force particulier sur l'organe de commande, le retour de force étant antagoniste au déplacement de l'organe de commande et perceptible par l'utilisateur.

Avec les modules de commande connus, intégrant un dispositif de commande haptique du type actionneur passif, on rencontre des inconvénients. En effet, un actionneur passif ne peut que s'opposer au mouvement de l'organe de commande et ne permet pas d'obtenir une position d'indexage stable dans le temps pour l'organe de commande. La précision de l'organe de commande s'en trouve ainsi affectée.

On connaît également des systèmes d'indexage mécanique qui induisent une sensation particulière au manipulateur de l'organe de commande. Les systèmes mécaniques sont par conséquent spécifiques à chaque produit, en fonction de la sensation recherchée. Pour chaque haut de colonne de direction différent, on a donc des caractéristiques structurelles et un profil de retour de force spécifiques. Les moyens générant le retour d'effort ne peuvent ainsi pas être standardisés pour des produits, par exemple des hauts de colonne de directions différents.

Le but de la présente invention vise à pallier aux inconvénients de l'état de la technique et à réaliser un module de commande générant un retour de force réglable, dont la finesse de réglage permet de s'approcher au mieux de sensations recherchées par la personne actionnant le module de commande tout en évitant les inconvénients liés à une position d'indexage flottante.

Selon l'invention, le module de commande comporte un moyen d'indexage mécanique pour ramener et maintenir l'organe de commande, en l'absence d'une manipulation de l'organe de commande, dans au moins une position d'indexage stable prédéfinie.

L'utilisation d'un dispositif de commande haptique, dont l'intérêt réside de façon connue, en la suppression de tout système mécanique, est dans le cadre de la présente invention associée à l'utilisation d'un système d'indexage mécanique. Une telle association permet d'obtenir, et de manière inattendue, d'énormes avantages techniques et économiques.

En outre, l'utilisation d'un actionneur actif, du type moteur, n'est aucunement nécessaire pour réaliser le module de commande conforme à l'invention.

Selon un exemple de réalisation, le dispositif de commande haptique comporte un actionneur passif s'opposant au déplacement de l'organe de commande.

L'utilisation d'un actionneur passif permet de réduire l'encombrement et les coûts d'un module de commande conforme à l'invention.

Selon un exemple de réalisation, la position de repos d'indexage stable est une position centrale ou extrême par rapport aux déplacements de l'organe de commande.

Selon un exemple de réalisation, le moyen d'indexage est un moyen de rappel élastique , du type ressort, sollicité pour ramener automatiquement vers au moins une position d'indexage stable, l'organe de commande s'écartant de ladite position d'indexage stable.

L'actionneur passif est par exemple un moyen de freinage, du type frein électromagnétique.

Selon un exemple de réalisation, le module de commande comporte un doigt d'indexage d'une part relié à l'organe de manipulation via un organe de liaison élastique et d'autre part s'appuyant élastiquement grâce à l'organe de liaison élastique sur une surface d'indexage fixe, du type relief, définissant au moins une position stable et au moins une position instable pour l'organe de commande, selon un degré de liberté distinct de celui associé à l'actionneur passif.

Selon un exemple de réalisation, le dispositif de commande haptique comprend des moyens pour d'une part naviguer dans des menus correspondant chacun à une courbe de retour d'effort particulière et d'autre part sélectionner l'un desdits menus.

Selon un exemple de réalisation, le module de commande comprend par exemple des moyens d'affichage pour visualiser les différents menus.

Le module de commande conforme à l'invention comprend des moyens d'enregistrement du menu sélectionné.

Selon un exemple de réalisation, le module de commande comprend au moins un capteur de position déterminant respectivement la position de l'organe de commande, les valeurs des paramètres physiques ainsi déterminés étant transmis à un microcontrôleur, pilotant l'actionneur passif à l'aide du menu sélectionné.

Selon un autre exemple de réalisation, le module de commande comprend également un capteur de force déterminant la force appliquée par l'utilisateur sur l'organe de commande, les valeurs des paramètres physiques ainsi déterminés étant transmis à un microcontrôleur pilotant l'actionneur passif à l'aide du menu sélectionné.

Les capteurs de force et de position peuvent être associés dans un module de commande conforme à l'invention.

Le module de commande comporte avantageusement un moyen de connexion pour établir une liaison avec un module de réglage, définissant les profils des courbes de retour d'effort enregistrés dans les menus.

La présente invention concerne également une commande sous-volant d'un véhicule, comportant un module de commande tel que présenté ci-dessus.

D'autres caractéristiques et avantages ressortiront également de la description détaillée, donnée ci-après, en référence aux dessins annexés à titre d'exemples non limitatifs, dans lesquels :
- la figure 1 est un exemple de courbe de retour de force générée par un système élastique, en fonction de la position d'un organe de manipulation d'un module de commande conforme à l'invention,
- la figure 2 est un exemple de courbe de retour de force générée par un actionneur passif, en fonction de la position d'un organe de manipulation d'un module de commande conforme à l'invention,
- la figure 3 représente un exemple de courbe de retour de force, générée par l'association d'un actionneur passif, avec un système élastique, en fonction de la position d'un organe de manipulation d'un module de commande conforme à l'invention,
- la figure 4 est un autre exemple de courbe de retour de force générée par un module de intégrant un dispositif de retour haptique,
- la figure 5 représente schématiquement un exemple d'interaction entre les éléments constitutifs d'un exemple de module de commande conforme à l'invention,
- la figure 6 représente schématiquement un exemple d'asservissement d'un module de commande conforme à l'invention,
- la figure 7 représente un schéma fonctionnel d'interaction d'un exemple de réalisation d'un module de commande conforme à l'invention,
- la figure 8 représente un exemple de réalisation d'un module de commande conforme à l'invention.

Il sera décrit plus en détail un module de commande pour activer et/ou désactiver des fonctionnalités d'un appareil et plus particulièrement d'un véhicule.

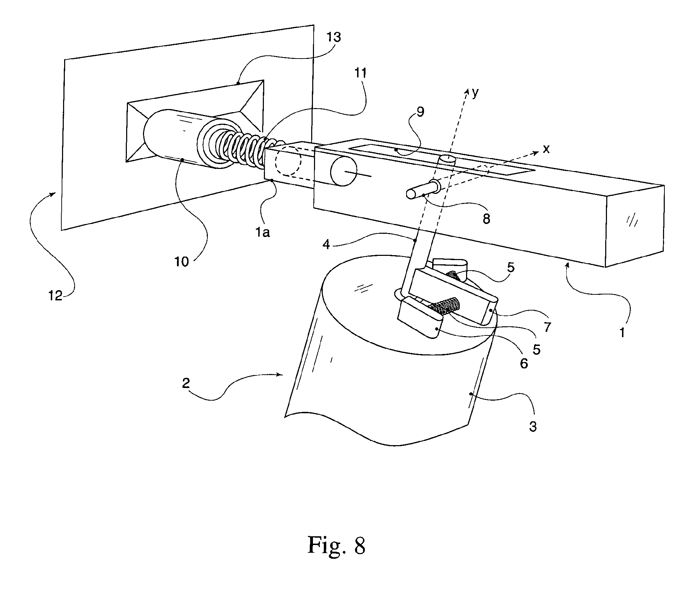

Le module de commande conforme à l'invention correspond par exemple à une commande sous-volant dont un exemple de réalisation est représenté à la figure 8. Le module de commande comporte un organe de commande (1) manipulable par l'utilisateur en vue de piloter au moins une fonctionnalité. L'organe de commande (1) est par exemple un levier déplaçable par pivotement par rapport à une première direction X et par rapport à une seconde direction Y. Ces deux directions de pivotement X et Y sont par exemple orthogonales entre elles.

Le module de commande comporte également un dispositif de commande haptique (2) permettant de générer un retour de force particulier sur l'organe de commande (1).

Le dispositif de commande haptique (2) est connu en tant que tel. Il permet de générer un retour de force perceptible par l'utilisateur et dépendant par exemple de la fonctionnalité sélectionnée. Par fonctionnalité il convient d'entendre aussi bien la mise en route ou l'arrêt d'une fonction d'un véhicule, que l'augmentation ou la diminution par exemple d'une intensité ou d'un paramètre physique ou d'une amplitude de déplacement d'un élément constitutif du véhicule.

Le dispositif de commande haptique (2) comprend un boîtier (3) dans lequel est agencé un actionneur (non représenté). Un axe d'entraînement (4) faisant saillie hors du boîtier (3) relie l'actionneur à l'organe de commande (1). Le dispositif de commande haptique (2) comprend par exemple un actionneur passif s'opposant au déplacement de l'organe de commande (1).

L'actionneur, par exemple un moteur ou un frein, peut ainsi s'opposer par la force qu'il génère, à la rotation de l'axe (4) impartie par l'organe de commande (1) et ce, lorsque l'utilisateur actionne ledit organe de commande (1) autour de la seconde direction de pivotement Y.

Le module de commande comporte également un moyen d'indexage mécanique pour ramener et maintenir l'organe de commande (1), en l'absence d'une manipulation de l'organe de commande (1), dans au moins une position d'indexage stable prédéfinie. Ceci permet à l'organe de commande (1) de retrouver automatiquement sa position d'indexage dès que l'utilisateur n'exerce plus d'action sur ledit organe de commande (1).

Le moyen d'indexage comporte par exemple un moyen de rappel élastique s'opposant au mouvement appliqué, en sollicitant le retour automatique de l'organe de commande (1) vers au moins une position d'indexage stable. Le moyen de rappel élastique comporte au moins un ressort (5) dont une extrémité est reliée à une butée fixe (6) solidaire du boîtier (3) et dont l'autre extrémité est reliée à une butée mobile (7) solidaire de l'axe d'entraînement (4).

L'exemple représenté à la figure 8 comprend deux butées fixes (6), une butée mobile (7) centrale ainsi que deux ressorts (5) reliant chaque butée fixe (6) à la butée mobile (7). Cette dernière est solidaire de l'axe d'entraînement (4) et permet de définir une position d'indexage stable lorsque l'action des deux ressorts (5) se compense. La position d'indexage est donc une position de repos stable pour l'organe de commande (1). Ce dernier, lorsqu'il est pivoté autour de la seconde direction de pivotement Y, revient automatiquement dans sa position d'indexage stable lorsque l'utilisateur n'exerce plus d'action sur ledit organe de commande (1). La position d'indexage stable correspond donc à au moins une position fixe de l'axe d'entraînement (4) par rapport au boîtier (3).

Comme représenté à la figure 8, la position de repos est une position centrale par rapport au déplacement de l'organe de commande (1), lequel peut ainsi être pivoté dans le sens horaire ou anti-horaire. La position d'indexage stable peut également correspondre à une position de repos extrême par rapport aux déplacements de l'organe de commande (1), c'est-à-dire en fin de course.

Selon un autre exemple de réalisation, on peut envisager de réaliser un module de commande dont l'organe de commande (1) présente une série de plusieurs positions d'indexage successives.

Afin d'augmenter les fonctionnalités accessibles par l'intermédiaire de l'organe de commande (1), il est également possible d'envisager un pivotement de ce dernier autour de la première direction de pivotement X, et ce via un axe complémentaire (8). Ce dernier traverse avantageusement l'axe d'entraînement (4).

Afin de permettre le pivotement de l'organe de commande (1) autour de l'axe de pivotement complémentaire (8) il est prévu un évidement central (9) dans ledit organe de commande (1), traversé par l'axe de pivotement (4).

D'autres variantes de réalisation techniques sont également envisageables pour permettre à l'organe de commande (1) de pivoter suivant les directions de pivotement X et Y orthogonales entre elles, sans sortir du cadre de la présente invention.

Selon un exemple de réalisation, le module de commande conforme à l'invention comporte un doigt d'indexage (10) d'une part relié à l'organe de commande via un organe de liaison élastique et d'autre part s'appuyant élastiquement grâce à l'organe de liaison élastique sur une surface d'indexage (12) fixe, du type relief (13), définissant au moins une position stable et au moins une position instable pour l'organe de commande (1), selon un degré de liberté distinct de celui associé à l'actionneur passif.

L'organe de liaison élastique (11) est par exemple un ressort reliant le doigt d'indexage (10) à une extrémité de montage (1 a) de l'organe de commande (1). La surface d'indexage (12) présente avantageusement le relief (13) définissant au moins une position d'indexage stable compatible avec la position d'indexage stable définie par les ressorts (5) et les butées fixes (6) et mobile (7). Dans un tel exemple de réalisation, le retour d'effort généré par l'actionneur passif tient compte du retour d'effort spécifique pouvant se rapporter au doigt d'indexage (12), afin de ne pas altérer la sensation du manipulateur de l'organe de commande (1).

L'organe de commande (1) peut également être une palette de commande du type bouton poussoir, ou un interrupteur glissant du type curseur ou une molette, sans sortir du cadre de la présente invention.

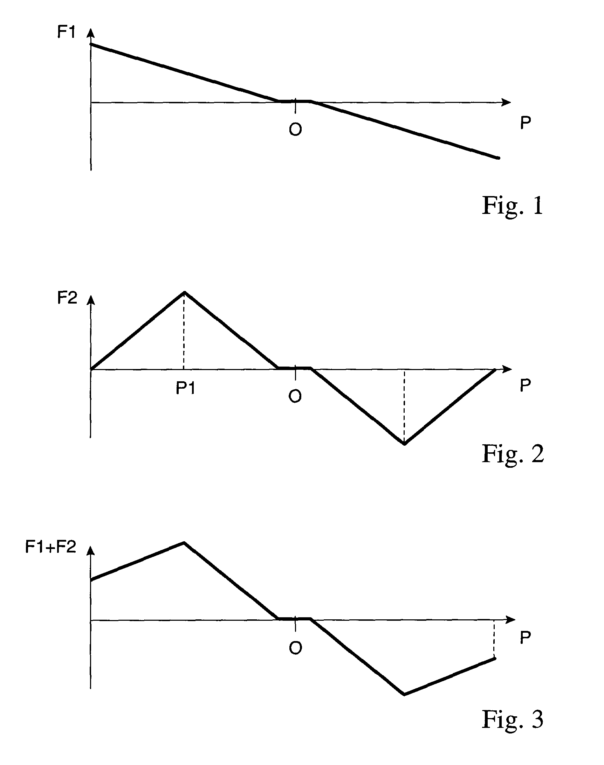

La figure 1 représente par exemple une courbe de retour de force (F₁) générée par un moyen de rappel élastique du type ressort. La courbe représentée montre la force de retour (F₁)par rapport à la position (P) de l'organe de commande (1) et ce, de part et d'autre d'une position de repos central (O).

La figure 2 représente un exemple de courbe de retour de force (F₂) générée par un actionneur passif d'un dispositif de commande haptique (2). La force (F₂) est représentée en fonction de la position (P) de l'organe de commande (1). Les ressorts (5) du dispositif d'indexage permettent de générer une force comparable à celle schématisée à la figure 1. En associant ce retour de force à celui généré par le dispositif de commande haptique (2) (cf. figure 2) on obtient une courbe de retour de force (F) schématisée à la figure 3.

Dans cet exemple de retour de force (F), la combinaison de l'effet d'un moyen de rappel élastique avec l'effet d'un actionneur passif permet de conserver la position d'indexage central O d'une part et de ramener l'organe de commande (1) dans sa position d'indexage central stable quelle que soit sa position (P) correspondant à sa course de déplacement. En effet, lorsque l'organe de commande (1) est déplacé dans une position extrême il subsiste toujours une force de rappel suffisante pour le ramener vers la position d'indexage central O. En outre, l'utilisation d'un actionneur passif permet de modifier la force générée sur l'organe de commande (1) et de modifier ainsi la sensation de l'utilisateur lorsqu'il actionne ledit organe de commande (1).

Le module de commande conforme à l'invention comporte par exemple un moyen de connexion pour établir une liaison avec un module de réglage, définissant les profils des courbes de retour d'effort enregistrées dans les menus. A titre de variante, le transfert de données et/ou d'instructions entre le module de réglage et le module de commande peut également se faire à l'aide d'une liaison sans fils, connue en tant que telle.

Selon un exemple de réalisation, le module de commande comprend un capteur de position (CP) et un capteur de force (CF), déterminant respectivement la position de l'organe de commande (1) et la force appliquée sur ce dernier par l'utilisateur. Les valeurs des paramètres physiques ainsi déterminés sont transmis à un microcontrôleur (MP) pilotant l'actionneur passif à l'aide du menu sélectionné.

Selon un autre exemple de réalisation, le module de commande comporte un capteur de position (CP) seul, pour appliquer une consigne sans vérifier la force appliquée sur l'organe de commande (1). Les moyens de mesure et de commande sont alors simplifiées.

Le dispositif de commande haptique (2) comprend avantageusement des moyens pour d'une part naviguer dans des menus correspondant chacun à une courbe de retour d'effort particulière et d'autre part sélectionner l'un desdits menus. Le module de commande comprend par ailleurs des moyens pour enregistrer le menu sélectionné par l'utilisateur. Il est donc possible, avec un même module de commande conforme à l'invention, de répondre à des souhaits divers et variés en matière de retour d'effort, émanant par exemple des constructeurs de hauts de colonne de direction.

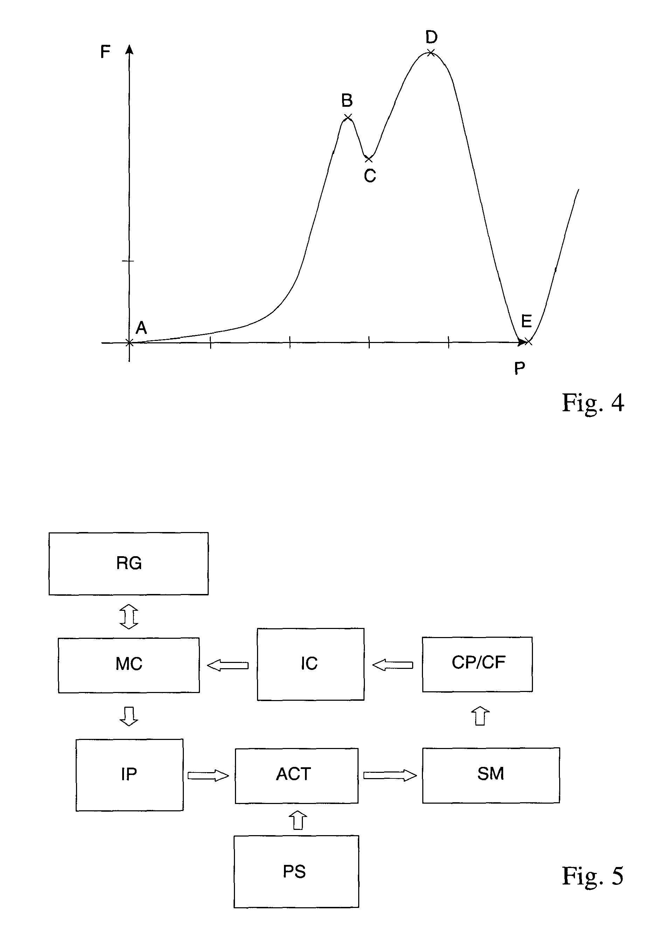

Le module de réglage comprend de préférence des moyens pour déterminer et sélectionner une courbe de retour de force (F) dont un exemple de profil est représenté à la figure 4. A cette fin, le module de réglage comprend des moyens pour déterminer des points caractéristiques A, B, C, D, E d'une courbe de retour de force ou d'effort, reflétant sensiblement la sensation recherchée pour l'utilisateur et des moyens de calcul pour déterminer la courbe passant par ces points caractéristiques A, B, C, D, E. Ce retour d'effort est transmis à l'organe de commande (1) par l'intermédiaire de l'actionneur passif.

On pourra se reporter par exemple à la figure 4 représentant un exemple de courbe de retour d'effort (F) et des points caractéristiques A, B, C, D, E s'y rapportant. La courbe de la figure 4 représente la courbe de retour d'effort (F) en fonction de la position (P) de l'organe de commande (1). Les moyens de calcul, par exemple le microcontrôleur (MP), permettent de déterminer la courbe passant par les points caractéristiques A, B, C, D, E en utilisant un modèle mathématique. Ce modèle permet par exemple de déterminer le polynôme passant par les points caractéristiques A, B, C, D, E et à calculer la dérivée de ce polynome s'annulant en ces points caractéristiques A, B, C, D, E.

Le module de commande comprend également des moyens pour déplacer un ou plusieurs points caractéristiques A, B, C, D, E affinant ainsi la forme de la courbe de retour d'effort (F) et les sensations recherchées pour l'utilisateur.

Avantageusement, le module de réglage comprend des moyens de représentation graphique (RG) montrant la position des points caractéristiques et la courbe de retour d'effort (F) calculée et passant par les points caractéristiques A, B, C, D, E. Les moyens de représentation graphique (RG) permettent à l'utilisateur et plus précisément lors de la mise au point du module de commande, de visualiser les points caractéristiques et la courbe correspondante. Les moyens de représentation graphique (RG) permettent également à l'utilisateur d'intervenir pour modifier la position d'un ou plusieurs desdits points caractéristiques. Les moyens de représentation graphique, peuvent également servir à faire défiler les divers menus accessibles, remplaçant ainsi des moyens d'affichage du module de commande. Une fois le menu adéquat sélectionné et enregistré, l'utilisateur n'a plus à effectuer de réglage sur le module de commande.

Le module de commande enregistre alors, via le microcontrôleur, la courbe d'effort (F) calculée et correspondant aux sensations recherchées par l'utilisateur.

Selon un exemple de réalisation, les moyens de calcul permettent de définir des plages de position pour l'organe de commande (1) auxquelles sont associées des fonctions mathématiques correspondantes (polynômes) de manière à définir pour chaque plage un profil complexe de la loi de retour d'effort. La succession de profils est alors juxtaposée pour constituer la courbe de retour d'effort (F) pour l'ensemble des positions (P) accessibles par l'organe de commande (1).

L'utilisateur peut ainsi être confronté à des sensations diverses et variées correspondant par exemple à des efforts plus ou moins importants à vaincre lors du pivotement de commande (1) en fonction de la position (P) de ces derniers.

La figure 5 représente schématiquement un exemple d'interaction entre les éléments constitutifs d'un module de commande conforme à l'invention. Le module de commande comprend ainsi un système mécanique (SM) incluant l'organe de commande (1) ainsi que les capteurs de position (CP) et de force (CF) transmettant les informations, mesurées sur le système mécanique (SM), via une interface de capteurs (IC) vers le microcontrôleur (MC). Ce dernier, grâce à des moyens de représentation graphique (RG) et une interface graphique permet d'afficher d'une part les points caractéristiques A, B, C, D, E et la courbe de retour d'effort s'y rapportant, et d'autre part d'intervenir pour modifier le positionnement desdits points caractéristiques.

Une interface de puissance (IP) permet au microcontrôleur (MC) de piloter l'actionneur passif (ACT). Ce dernier, grâce à une alimentation de puissance (PS) permet d'appliquer une force (F) ou un effort sur le système mécanique (SM).

Les moyens de représentation graphique (RG) peuvent comprendre un écran permettant à l'utilisateur procédant au réglage du module de commande, de visualiser la position des points caractéristiques A, B, C, D, E et de choisir le nombre de points caractéristiques.

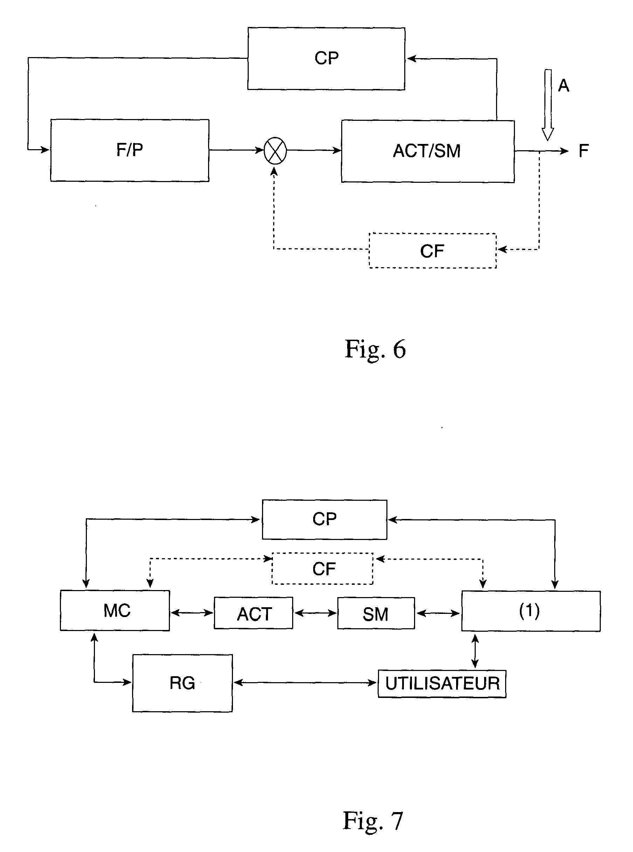

En se reportant à la figure 6, représentant schématiquement un exemple d'asservissement d'un module de commande conforme à l'invention, on a par exemple suite à une action (A) de l'utilisateur sur l'organe de commande (1) une mesure de la position (P) de l'organe de commande (1) via le capteur de position (CP) ainsi qu'une mesure de la force appliquée sur ledit organe de commande (1) par l'utilisateur, via le capteur de force (CF). La mesure de force via le capteur de force (CF) peut être directe ou indirecte. Lorsqu'il s'agit d'une mesure de force directe on mesure directement la force appliquée sur l'organe de commande (1) et lorsqu'il s'agit d'une mesure indirecte on mesure une grandeur physique, par exemple une intensité ou une vitesse de rotation de l'actionneur, image de l'intensité de la force appliquée sur l'organe de commande (1).

La position de l'organe de commande (1) permet au microcontrôleur (MC) de déterminer l'intensité de la force du retour d'effort à appliquer via l'actionneur (ACT), et ce grâce à la courbe d'effort (F) et en fonction du déplacement (P), enregistrée dans le module de commande.

Le microcontrôleur (MC) permet ensuite de moduler l'information donnée à l'actionneur (ACT) pour appliquer un effort particulier sur l'organe de commande (1) en fonction de l'information issue du capteur de force (CF) mesurant la force d'actionnement de l'utilisateur. Ceci permet avantageusement de tenir compte d'éventuelles réactions de l'organe de commande (1) liées à des frottements, jeux ou autres imperfections du mécanisme et de ne pas influencer la sensation recherchée par l'utilisateur avec le retour d'effort.

Un exemple de schéma fonctionnel d'un module de commande conforme à l'invention est représenté par exemple à la figure 7. Le capteur de position (CP) et le capteur de force (CF) transmettent directement des informations issues de l'organe de commande (1) au microcontrôleur (MC). Ce dernier pilote l'actionneur (ACT) générant le retour de force (F) sur le mécanisme (SM) dans lequel est agencé l'organe de commande (1). Le mécanisme (SM) transmet donc cette force à l'organe de commande (1), lequel constitue ainsi l'interface entre l'utilisateur et le mécanisme (SM).

L'utilisateur agit sur le module de réglage pour modifier les informations calculées et enregistrées dans le microcontrôleur (MC). Les moyens de représentation graphique (RG) et le cas échéant le module de réglage sont déconnectés du microcontrôleur (MC) dès que la courbe de retour d'effort (F) présente le profil recherché et que la sensation de retour d'effort pour l'utilisateur correspond à ses attentes. Cette courbe, tenant compte en outre des paramètres liés à la construction du module de commande et du support auquel il est destiné, par exemple un haut de colonne de direction, est enregistrée par l'intermédiaire du microcontrôleur (MC).

## Revendications

1. Module de commande pour activer et/ou actionner des fonctionnalités d'un appareil, d'une machine ou d'un véhicule, comportant :
- un organe de commande (1) manipulable par l'utilisateur en vue de piloter au moins une fonctionnalité,
- un dispositif de commande haptique (2) permettant de générer un retour de force sur l'organe de commande, le retour de force étant antagoniste au déplacement de l'organe de commande (1) et perceptible par l'utilisateur,
**caractérisé en ce qu'**il comporte un moyen d'indexage mécanique pour ramener et maintenir l'organe de commande (1) en l'absence d'une manipulation de l'organe de commande (1), dans au moins une position d'indexage stable prédéfinie.

2. Module de commande selon la revendication 1, **caractérisé en ce que** le dispositif de commande haptique (2) comporte un actionneur passif s'opposant au déplacement de l'organe de commande (1).

3. Module de commande selon la revendication 1 ou 2, **caractérisé en ce que** le moyen d'indexage est un moyen de rappel élastique, du type ressort (5), sollicité pour ramener automatiquement vers au moins une position d'indexage stable, l'organe de commande (1) s'écartant de ladite position d'indexage stable.

4. Module de commande selon la revendication 2, **caractérisé en ce que** l'actionneur passif est un moyen de freinage, du type frein électromagnétique.

5. Module de commande selon l'une quelconque des revendications 1 à 4, **caractérisé en ce que** la position d'indexage stable est une position de repos centrale ou extrême par rapport aux déplacements de l'organe de commande (1).

6. Module de commande selon l'une quelconque des revendications 2 à 5, **caractérisé en ce qu'**il comporte un doigt d'indexage (10) d'une part relié à l'organe de commande (1) via un organe de liaison élastique (11) et d'autre part s'appuyant élastiquement grâce à l'organe de liaison élastique sur une surface d'indexage fixe (12), du type relief (13), définissant au moins une position stable et au moins une position instable pour l'organe de commande (1) selon un degré de liberté distinct de celui associé à l'actionneur passif.

7. Module de commande selon l'une quelconque des revendications 1 à 6, **caractérisé en ce que** le dispositif de commande haptique (2) comprend des moyens pour d'une part naviguer dans des menus correspondant chacun à une courbe de retour d'effort particulière et d'autre part sélectionner l'un desdits menus.

8. Module de commande selon la revendication 7, **caractérisé en ce qu'**il comprend des moyens d'enregistrement du menu sélectionné.

9. Module de commande selon la revendication 7 ou 8, **caractérisé en ce qu'**il comprend au moins des moyens d'affichage (RG) pour au moins visualiser les différents menus.

10. Module de commande selon l'une quelconque des revendications 7 à 9, **caractérisé en ce qu'**il comprend un capteur de position (CP) déterminant la position de l'organe de commande (1), les valeurs des paramètres physiques ainsi déterminés étant transmis à un microcontrôleur (MC), pilotant l'actionneur passif à l'aide du menu sélectionné.

11. Module de commande selon la revendication 10, **caractérisé en ce qu'**il comprend également un capteur de force (CF) déterminant la force appliquée par l'utilisateur sur l'organe de commande (1), les valeurs des paramètres physiques ainsi déterminés étant transmis à un microcontrôleur (MC) pilotant l'actionneur passif à l'aide du menu sélectionné.

12. Module de commande selon la revendication 8, **caractérisé en ce qu'**il comporte un moyen de connexion pour établir une liaison avec un module de réglage, définissant les profils des courbes de retour d'effort enregistrées dans les menus.

13. Commande sous volant comportant un module de commande conforme à l'une quelconque des revendications 1 à 12.
